# EUROPEAN PATENT SPECIFICATION

(11) **EP 1 396 850 B1**
(45) Date of publication and mention of the grant of the patent: **26.11.2008**
(21) Application number: 03019011.0
(22) Date of filing: 21.08.2003
(51) Int. Cl.: G11B 5/00

(54) **Method and apparatus for writing and inspecting servo information on disc drive**
Verfahren und System für die Aufzeichnung und Inspektion von Servoinformation auf einem Plattenwerk
Procédé et system d'enregistrement et d'inspection d'information d'asservissement dans un unité de disque

(30) Priority: 21.08.2002 KR 2002049427
(43) Date of publication of application: 10.03.2004
(73) Proprietor: SAMSUNG ELECTRONICS CO., LTD., Suwon-City, Kyungki-do (KR)
(72) Inventor: Park, Seung-chul, Suwon-si Gyeonggi-do (KR); Jung, Kwang-jo, Suwon-si Gyeonggi-do (KR)
(74) Representative: Grünecker, Kinkeldey, Stockmair & Schwanhäusser Anwaltssozietät

(56) References cited:
- EP-A- 0 246 705
- EP-A- 0 479 701
- PATENT ABSTRACTS OF JAPAN vol. 2000, no. 24, 11 May 2001 (2001-05-11) & JP 2001 189062 A (TOSHIBA CORP), 10 July 2001 (2001-07-10)

## Description

The present invention relates to a method and an apparatus for controlling a disc drive, and more particularly, to a method and an apparatus for writing and inspecting servo information in a disc drive that minimize the effect of servo information written in adjacent cylinders caused by a gap erase field in a disc drive, write servo information on the disc drive and perform servo information inspection and defect processing.

A hard disc drive includes a plurality of magnetic transducers which sense a magnetic field and magnetize a single rotating disc or each of a plurality of rotating discs to write and read information on and from the disc. In general, such information is formatted in a plurality of sectors in circular tracks. There is a number of tracks across each surface of a disc. Tracks above each other on the plurality of rotating discs are grouped into cylinders. Therefore, each track is also defined by a cylinder.

In general, each of the transducers is integrated into a slider incorporated into a head gimbal assembly (HGA). Each HGA is attached to an actuator arm. The actuator arm has a voice coil adjacent to a certain magnetic assembly, together with a voice coil motor. In general, the hard disc drive includes a driving circuit which supplies current used to excite the voice coil motor, and a controller. The excited voice coil motor rotates the actuator arm and moves each of the transducers across the surfaces of disc(s).

When information is written or read, there is a feasibility that the hard disc drive performs a seek routine when each of the transducers is moved from one cylinder to another cylinder. During the seek routine, the voice coil motor is excited by a current used to move each of the transducers to a new position on the surface of a disc. Also, the controller executes a servo routine on which each of the transducers is moved to an accurate position of a cylinder with respect to the center of a track.

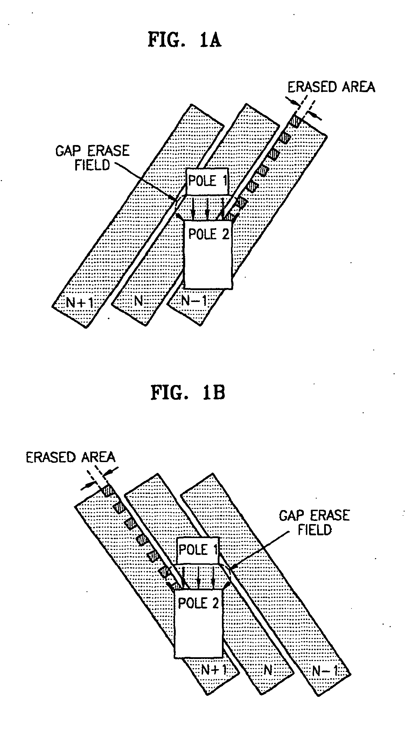

Each of the transducers includes a writer for writing data and a reader for reading data. In a write mode, as shown in FIGS. 1A and 1B, current is flowed through a pole 1 and a pole 2 of the writer such that a magnetic field is formed to magnetize the disc.

If the magnetic field is formed between the pole 1 and the pole 2, as shown in FIGS. 1A and 1B, an undesired gap erase field is additionally formed. Thus, as a tracks-per-inch (TPI) increases in a high-density writing apparatus, the gap erase field greatly affects adjacent cylinders.

In a general servo track write operation, the number of cylinders is increased from 0, the number of a cylinder in an outer direction (OD) to the number of the last cylinder in an inner direction (ID), so servo information is written in a disc. However, as a head (transducer) is placed in the OD, middle direction (MD), or ID, a central axis of the poles 1 and 2 and a cylinder generate positive skew, zero skew, and negative skew, respectively. As shown in FIG. 1B, when servo information is written in an N-th cylinder in a direction of skew '0' from the OD, the central axis of the poles 1 and 2 generate a positive skew with respect to the N-th cylinder axis. The gap erase field additionally generated by the positive skew affects an (N+1)-th cylinder. However, the servo information is not yet written in the (N+1)-th cylinder, and the servo information will be written in the (N+1)-th cylinder after being written in the N-th cylinder. Thus, from the OD to the skew '0', the gap erase field does not affect the servo information on an adjacent field.

However, as shown in FIG. 1A, when the central axis of the poles 1 and 2 makes a negative skew and the gap erase field writes the servo information on the N-th cylinder and affects the servo information written in an (N-1)-th cylinder, the effect of the gap erase field reduces the width of a signal already written, and thus, the magnitude of a servo signal is quickly reduced in the cylinder after the skew '0'. Reduction in the magnitude of the servo signal is greatly affected by noise. Thus, the servo signal is converted into a wrong cylinder value or position error signal (PES) value during an A/D conversion operation, and a normal servo control (seek or following) operation cannot be performed.

In order to solve these problems, Japanese Patent Publication No. 2001-189062 titled "Disc Memory Apparatus and Servo Data Writing Method", discloses a technique in which, so as to reduce an effect of an erase width, servo information is written in a radial direction from one side of an inner direction or an outer direction, replaced with another one in an intermediate region in which the skew of a writing head is almost '0', and written in the radial direction from the other side of the inner direction or the outer direction, is suggested in the above well-known publication.

However, as shown in FIG. 6 of this publication, due to precision of a servo track writer, servo data are superimposed on a track of an intermediate region in which a direction of writing servo data is reversed, and the servo data are abnormally written in the superimposed writing region. Also, servo data inspection and track defect processing should be performed in a region in which the servo data are superimposed and written. However, this technique has not yet developed, and thus, there is a limitation in applying the technique disclosed in Japanese Patent Publication No. 2001-189062 to a product.

JP-A-2001189062 discloses a disc storage device and a servo data write-in method in consideration of effects of erase width and its skew angle of a write head. The disc storage device having a skew angle of an actuator in the write head provides a disc drive range of positive/negative values in a area in the radio direction of a disc, wherein servo data are written in the disc from either direction of an outer peripheral side on an inner peripheral side in consideration of the skew angle and the erase width accompanied with it such that a data track group whose erase width become minimal is constituted on the disc.

It is the object of the present invention to provide an improved method and an improved apparatus for writing and inspecting servo information on a disc drive.

This object is solved by the subject matters of the appended independent claims.

Preferred embodiments are defined by the dependent claims.

The above and other aspects and advantages of the present invention will become more apparent by describing in detail preferred embodiments thereof with reference to the attached drawings in which:
FIGS. 1A and 1B illustrate the effect on a gap erase field of adjacent cylinders of a hard disc drive when servo information is written therein;
FIG. 2 shows a top view of a hard disc drive according to the present invention;
FIG. 3 shows a circuit diagram of an electrical system for controlling a hard disc drive according to an embodiment of the present invention;
FIG. 4 is a flowchart illustrating a method for writing servo information on a disc drive according to the present invention;
FIG. 5 is a flowchart illustrating a method for writing and inspecting servo information on a disc drive according to the present invention; and
FIG. 6 illustrates a writing state of a cylinder to which the method for writing servo information on the disc drive according to the present invention is applied.

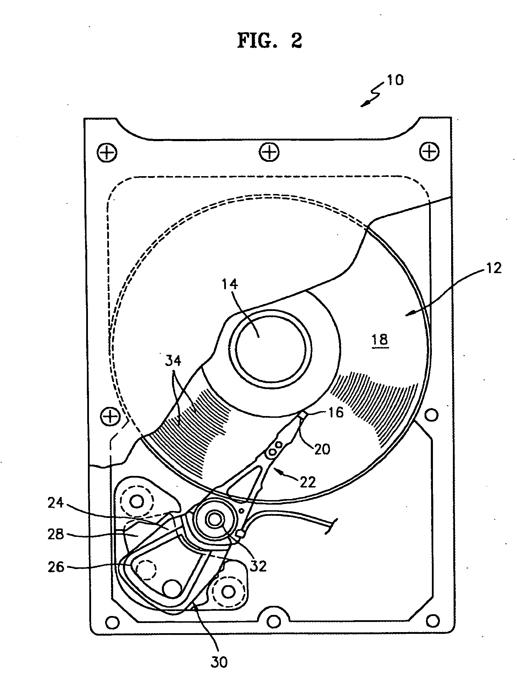

FIG. 2 shows a top view of a hard disc drive according to the present invention. A drive 10 includes at least one magnetic disc 12 rotated by a spindle motor 14. The drive 10 further includes a transducer 16 adjacent to a disc surface 18.

The transducer 16 senses a magnetic field and magnetizes the disc 12 to read and write information from and on the rotating disc 12. In general, the transducer 16 is coupled with the disc surface 18. Although a single transducer 16 is shown, the transducer 16 includes a writing transducer for magnetizing the disc 12 and a separated reading transducer for sensing the magnetic field of the disc 12. The reading transducer includes a magneto-resistive (MR) device.

The transducer 16 may be integrated into a slider 20. The slider 20 is designed to generate an air bearing between the transducer 16 and the disc surface 18. The slider 20 is coupled with a head gimbal assembly (HGA) 22. The HGA 22 is attached to an actuator arm 24 having a voice coil 26. The voice coil 26 allows a voice coil motor (VCM) 30 to be adjacent to a certain magnetic assembly 28. Current flowed through the voice coil 26 causes a torque that rotates the actuator arm 24 with respect to a bearing assembly 32. Rotation of the actuator arm 24 causes the transducer 16 to move across the disc surface 18.

In general, information is stored on a circular track 34 of the disc 12. In general, each track 34 includes a plurality of sectors. Each of the sectors includes a data field and an identification field. The identification field is comprised of a gray code use to identify a sector and a track (a cylinder). The transducer 16 is moved across the disc surface 18 so as to read and write information from and on another track. In general, the moving of the transducer 16 across another track is called a seek routine.

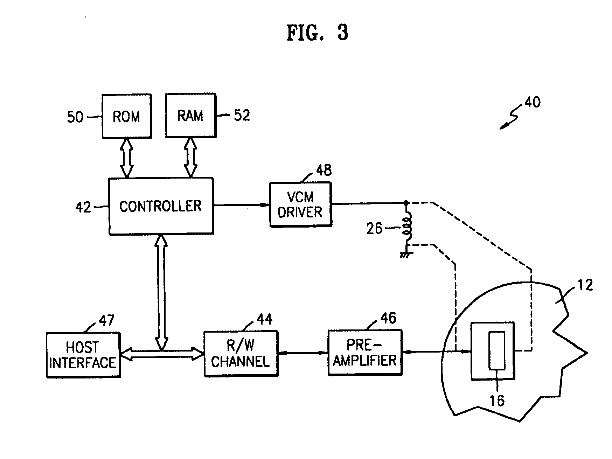

FIG. 3 shows a circuit diagram of an electrical system for controlling a hard disc drive according to the present invention. A system 40 includes a read/write (R/W) channel 44 and a controller 42 coupled with the transducer 16 by a pre-amplifier 46. The controller 42 includes a digital signal processor (DSP), a microprocessor, and a microcontroller. The controller 42 applies a control signal to the R/W channel 44 so as to read and write information from and on the disc 12. In general, information is transmitted to a host interface 47 from the R/W channel 44. The host interface 47 includes a buffer memory allowing a disc drive and a control circuit to interface with a system, such as a personal computer (PC).

Also, the controller 42 is coupled with a VCM driver 48 which supplies driving current to the voice coil 26. The controller 42 applies a control signal to the VCM driver 48 so as to control the excitation of the VCM 30 and the movement of the transducer 16.

In a read mode, the R/W channel 44 converts an analog signal read by the transducer 16 and amplified by the pre-amplifier 46 into a digital signal that can be read by a host computer (not shown), outputs the digital signal to the host interface 47, receives user data output from the host computer from the host interface 47. And in a write mode, the R/W channel 44 converts the user data into recording current which can be written in the disc 12, and outputs the recording current to the pre-amplifier 46.

The controller 42 is also coupled with a read only memory or a nonvolatile memory, such as a flash memory 50, and a random access memory 52. The memories 50 and 52 are commanded by the controller 42, so as to execute a software routine. The software routine includes a seek routine during which the transducer 16 is moved from one track to another track. The seek routine includes a servo control routine when the transducer 16 is moved to a correct track.

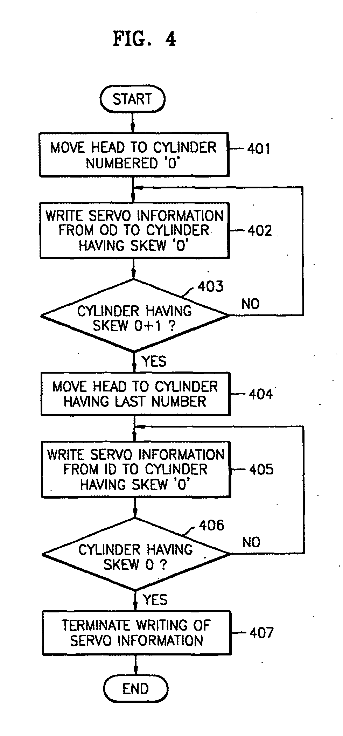

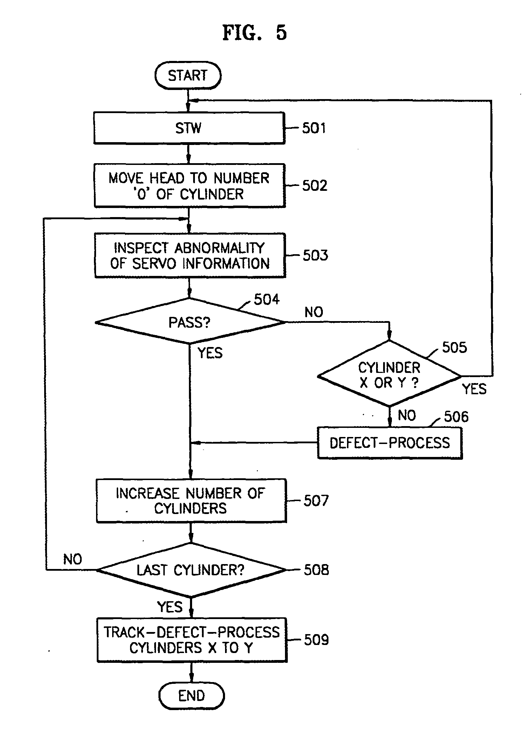

Also, computer programs implemented based on the flowchart shown in FIGS. 4 and 5 are stored in the memories 50 and 52.

As a result, the controller 42 controls the transducer 16 to sequentially write servo information in a direction of a cylinder having skew '0' at an outer surface in an outer region and to sequentially write servo information in the direction of the cylinder having skew '0' at an inner surface in an inner region centering on the cylinder having structural skew '0' when servo information is written. That is, the controller 42 controls the transducer 16 to sequentially write the servo information from a cylinder having the largest number to a cylinder prior to the cylinder having skew '0' after sequentially writing the servo information from a cylinder having the least number to the cylinder having skew '0'.

In addition, after the servo information is written in the cylinder, when the servo information written in the cylinder is inspected and errors occur in the cylinder at a predetermined distance from a cylinder having skew '0', the controller 42 controls the transducer 16 to perform a servo information writing operation again. If not, the controller 42 controls the transducer 16 to perform defect processing of the cylinder in which errors occur and cylinders within a predetermined distance from the cylinder having skew '0'.

Hereinafter, an embodiment of the method for writing servo information on the disc drive according to the present invention will be described with reference to FIG. 4.

When a servo information write mode is executed, in step 401, the controller 42 controls the VCM 30 to move a head (transducer) to a cylinder numbered '0'.

In step 402, the number of cylinders is sequentially increased from the cylinder having the least number '0' in an outer direction (OD) of the disc 12 to the cylinder having skew '0', and servo information is written in the cylinder.

In step 403, while the servo information is sequentially written in a direction of the skew '0' from the OD, it is determined whether the current cylinder in which the head is placed reaches a cylinder having skew '0+1'. This is because it is determined whether writing of the servo information is completed from the number '0' of the cylinder in the OD to the cylinder having skew '0'.

As a result of determination in step 403, if the head does not reach the cylinder having skew '0+1', the method returns to step 402, and the number of cylinders is sequentially increased, and servo information is continuously written in the cylinder.

In step 404, if the head reaches the cylinder having skew '0+1', the head is moved to a cylinder having the last number (largest number) in an inner direction (ID) of the disc 12.

In step 405, the number of cylinders is reduced from the largest number of the cylinder in the ID to the cylinder having skew '0', and servo information is written in the cylinder.

In step 406, while the servo information is sequentially written in a direction of the skew '0' from the ID, it is determined whether the current cylinder in which the head is placed reaches a cylinder having skew '0+1'. This is because it is determined whether writing of the servo information is completed from the cylinder having the largest number in the ID to the cylinder having skew '0+1'.

As a result of determination in step 406, if the head does not reach the cylinder having skew '0', the method returns to step 405, and the number of cylinders is sequentially reduced, and servo information is continuously written in the cylinder.

In step 407, if the head reaches the cylinder having skew '0', the servo information is written in all cylinders, and thus, writing of the servo information is terminated.

According to the above method, after the servo information is sequentially written from the cylinder having the least number to the cylinder having skew '0', the head is moved to the cylinder having the largest number. Then, the servo information is sequentially written from the cylinder having the largest number to a cylinder prior to the cylinder having skew '0'. Thus, the effect of adjacent cylinders caused by the gap erase field can be minimized.

In the flowchart of FIG. 4, after the servo information is written in the direction of the cylinder having skew '0' from the OD, the servo information is written in the direction of the cylinder having skew '0' from the ID. However, alternatively, after the servo information is written in the direction of the cylinder having skew '0' form the ID, the servo information may be written in the direction of the cylinder having skew '0' from the OD.

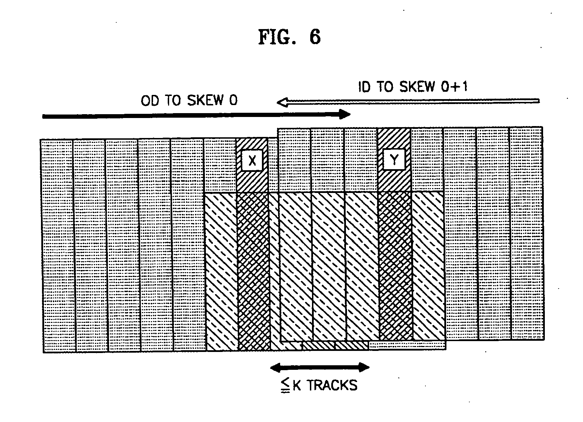

As described above, centering on the cylinder having skew '0', the servo information is written in an opposite direction, such as in the direction of the cylinder having skew '0' from the OD and in the direction of the cylinder having skew '0' from the ID. As a result, due to precision of disc drive control, centering on the cylinder having skew '0', the servo information may be superimposed on some cylinders and written, as shown in FIG. 6.

In this way, in order to prevent lowering of quality caused by superimposed writing in the some cylinders, a cylinder inspection operation shown in FIG. 5 is performed.

Before a cylinder inspection operation, in step 501, servo information is written in the cylinder using the method of FIG. 4.

After writing of the servo information is completed, in step 502, the head is moved to the number '0' of the cylinder.

In step 503, the number of cylinders is increased, and an abnormality of the servo information is inspected. In step 504, the abnormality of the servo information written in the cylinder is determined whether gray information, servo sector information, and burst information are normal.

As a result of inspection in step 503, if abnormality occurs in the written servo information, in step 505, it is determined whether a cylinder in which abnormality occurs corresponds to a cylinder X or Y within a predetermined distance from the cylinder having skew '0'. Here, the predetermined distance is decided by considering precision of the disc drive, in particular, by considering precision of a push pin for moving the head. As a result of determination in step 505, if servo information errors occur in the X or Y cylinder, this case means that the servo information is excessively superimposed on the cylinder, and thus, the method returns to step 501, and servo information is again written using the method of FIG. 4.

If the cylinder does not correspond to the cylinder X or Y, in step 506, the cylinder in which the servo information errors occur is defect-processed.

As a result of determination in step 504, in step 507, if the abnormality of the servo information does not occur in the cylinder, the number of cylinders is increased.

After inspection of the servo information of the last cylinder is terminated, in steps 508 and 509, cylinders X to Y are track-defect-processed. This is to prevent a case where if a superimposed region exists, the servo information in the cylinder is nonlinearly increased, and large errors occur between a cylinder by estimated by a servo controller and the current cylinder during a seek operation at a short distance in the superimposed region such that a normal seek operation cannot be performed. That is, if the seek operation is performed at over a predetermined distance, X and Y cylinders at a proper distance are selected and defect-processed so as to have a reserve time for compensating errors between the estimated cylinder and the current cylinder.

In this case, if the processed track defect exists in the same data zone, it is difficult to balance between the track defect and a data zone, such as bits-per-inch (BPI), such that it is effective to the cylinder having skew '0' is placed at an interface with the data zone and the track defect is dispersed into two data zones and maintained.

In the servo information inspection method according to the present invention, when abnormality occurs in servo information written in a cylinder at a predetermined distance from a cylinder having skew '0', this case corresponds to a case in which a region of a superimposed cylinder exceeds a design standard, and thus, a servo track write operation is again performed. When the abnormality does not occur in the servo information written in the cylinder at the predetermined distance from the cylinder having skew '0, a cylinder within a predetermined distance from the cylinder having skew '0' is track-defect-processed.

As described above, according to the present invention, centering on a cylinder having structural skew '0', servo information is written in a direction of the cylinder having skew '0' from an inner direction (ID) of a disc and in the direction of the cylinder having skew '0' from an outer direction (OD) of the disc so that a gap erase field does not affect adjacent cylinders. In addition, a servo information inspection operation is performed, and tracks of cylinders within a predetermined distance from the cylinder having skew '0' are defect-processed such that when the servo information is written the cylinder, interference on adjacent tracks is minimized, seek errors in a region of a cylinder in the vicinity of skew '0' are prevented, and abnormality of the written servo information is correctly determined.

The present invention may be implemented by a method, an apparatus, and a system. When the present invention is implemented with a software unit, elements of the present invention are code segments for performing essential works. Programs or code segments may be stored in a processor readable medium or transmitted in response to computer data signals coupled with a carrier wave in a transmission medium or communication networks. The processor readable medium includes a certain medium on which information can be stored or transmitted. The processor readable medium includes an electronic circuit, a semiconductor memory device, a ROM, a flash memory, an erasable ROM, a floppy disc, an optical disc, a hard disc, an optical fiber medium, and a radio frequency (RF) network. The computer data signals include certain signals which can be transmitted on a transmission medium, such as electronic network channels, optical fibers, airs, electronic fields, and RF networks.

While this invention has been particularly shown and described with reference to preferred embodiments thereof, it will be understood by those skilled in the art that various changes in form and details may be made therein without departing from the scope of the invention as defined by the appended claims.

## Claims

1. A method for writing servo information on a magnetic disc drive, the method comprising:
(a) sequentially writing (402) servo information from a cylinder having the least number to a cylinder having zero skew;
(b) after writing the servo information to the cylinder having zero skew, moving (404) a head to a cylinder having the largest number;
(c) sequentially writing (405) the servo information from the cylinder having the largest number to a cylinder prior to the cylinder having zero skew; and
(d) after (c), inspecting (503) the servo information written in a cylinder at a predetermined distance from the cylinder having zero skew and determining whether the servo information is correctly written.

2. The method as claimed in claim 1, further comprising, as a result of inspection of the servo information written in the cylinder at the predetermined distance from the cylinder having zero skew, if errors occur in the cylinder, returning to (a), writing servo information again, and if the errors do not occur in the cylinder, track-defect-processing cylinders within a predetermined distance from the cylinder having zero skew.

3. The method as claimed in claim 1 or 2, wherein the cylinder having zero skew is placed at an interface with a data zone, and a track defect is dispersed in two data zones.

4. A disc drive comprising:
a magnetic disc (12) having a surface;
a spindle motor which rotates the disc (12);
a magnetic transducer (16) which writes and reads information in and from the disc (12);
a voice coil motor (30) which moves the transducer (16); and
a controller (14) adapted for controlling the transducer (16) to perform (a) sequentially writing (402) servo information from a cylinder having the least number to a cylinder having zero skew; (b) after writing the servo information to the cylinder having zero skew, moving (404) a head to a cylinder having the largest number; (c) sequentially writing (405) the servo information from the cylinder having the largest number to a cylinder prior to the cylinder having zero skew; and (d) after (c), inspecting (503) the servo information written in a cylinder at a predetermined distance from the cylinder having skew '0' and determining whether the servo information is correctly written.

5. The disc drive as claimed in claim 4 adapted to operate according to the method claims 2 or 3.

## Patentansprüche

1. Verfahren zum Schreiben von Servo-Informationen auf ein Magnetplattenlaufwerk, wobei das Verfahren umfasst:
(a) sequenzielles Schreiben (402) von Servo-Informationen von einem Zylinder mit der niedrigsten Nummer auf einen Zylinder mit Null-Schräglauf;
(b) nach Schreiben der Servo-Informationen auf den Zylinder mit Null-Schräglauf, Bewegen (404) eines Kopfes zu einem Zylinder mit der höchsten Nummer;
(c) sequenzielles Schreiben (405) der Servo-Informationen von dem Zylinder mit der höchsten Nummer auf einen Zylinder vor dem Zylinder mit Null-Schräglauf; und
(d) nach (c) Prüfen (503) der auf einen Zylinder in einem vorgegebenen Abstand zu dem Zylinder mit Null-Schräglauf geschriebenen Informationen und Feststellen, ob die Servo-Informationen korrekt geschrieben sind.

2. Verfahren nach Anspruch 1, das des Weiteren als Ergebnis von Prüfung der auf den Zylinder in dem vorgegebenen Abstand zu dem Zylinder mit Null-Schräglauf geschriebenen Servo-Informationen umfasst, dass, wenn Fehler auf dem Zylinder auftreten, zu
(a) zurückgekehrt wird, erneut Servo-Informationen geschrieben werden, und, wenn die Fehler auf dem Zylinder nicht auftreten, Spurfehler-Verarbeitung von Zylindern innerhalb eines vorgegebenen Abstandes zu dem Zylinder mit Null-Schräglauf durchgeführt wird.

3. Verfahren nach Anspruch 1 oder 2, wobei der Zylinder mit Null-Schräglauf an einer Schnittstelle innerhalb einer Datenzone angeordnet wird und ein Spurfehler auf zwei Datenzonen verteilt wird.

4. Plattenlaufwerk, das umfasst:
eine Magnetplatte (12) mit einer Oberfläche;
einen Spindelmotor, der die Platte (12) dreht;
einen magnetischen Wandler (16), der Informationen auf die Platte (12) schreibt und von ihr liest;
einen Linearmotor (30), der den Wandler (16) bewegt; und
eine Steuereinheit (14), die so eingerichtet ist, dass sie den Wandler (16) so steuert, dass er durchführt:
(a) sequenzielles Schreiben (402) von Servo-Informationen von einem Zylinder mit der niedrigsten Nummer auf einen Zylinder mit Null-Schräglauf; (b) nach Schreiben der Servo-Informationen auf den Zylinder mit Null-Schräglauf Bewegen (404) eines Kopfes zu einem Zylinder mit der höchsten Nummer; (c) sequenzielles Schreiben (405) der Servo-Informationen von dem Zylinder mit der höchsten Nummer auf einen Zylinder vor dem Zylinder mit Null-Schräglauf; und (d) nach (c) Prüfen (503) der auf einen Zylinder in einem vorgegebenen Abstand zu dem Zylinder mit Null-Schräglauf geschriebenen Informationen und Feststellen, ob die Servo-Informationen korrekt geschrieben sind.

5. Plattenlaufwerk nach Anspruch 4, das so eingerichtet ist, dass es entsprechend den Verfahrensansprüchen 2 oder 3 arbeitet.

## Revendications

1. Procédé pour écrire des servo-informations sur une unité de disque magnétique, le procédé comportant les étapes consistant à :
(a) écrire séquentiellement (402) des servo-informations à partir d'un cylindre ayant le plus petit numéro dans un cylindre ayant une obliquité nulle,
(b) après avoir écrit les servo-informations dans le cylindre ayant une obliquité nulle, déplacer (404) une tête vers un cylindre ayant le plus grand numéro,
(c) écrire séquentiellement (405) les servo-informations depuis le cylindre ayant le plus grand numéro vers un cylindre situé avant le cylindre ayant une obliquité nulle, et
(d) après (c), inspecter (503) les servo-informations écrites dans un cylindre à une distance prédéterminée du cylindre ayant une obliquité nulle et déterminer si les servo-informations sont correctement écrites.

2. Procédé selon la revendication 1, comportant en outre les étapes consistant à, en résultat de l'inspection des servo-informations écrites dans le cylindre à la distance prédéterminée du cylindre ayant une obliquité nulle, si des erreurs se produisent dans le cylindre, revenir à (a), écrire à nouveau des servo-informations, et si les erreurs ne se produisent pas dans le cylindre, traiter des défauts de piste des cylindres dans une distance prédéterminée par rapport au cylindre ayant une obliquité nulle.

3. Procédé selon la revendication 1 ou 2, dans lequel le cylindre ayant une obliquité nulle est placé dans une interface ayant une zone de données, et un défaut de piste est réparti dans deux zones de données.

4. Unité de disque comportant :
un disque magnétique (12) ayant une surface,
un moteur à broche qui met le disque (12) en rotation,
un transducteur magnétique (16) qui écrit des informations dans le disque (12) et lit des informations à partir de celui-ci,
un moteur à bobine d'excitation (30) qui déplace le transducteur (16), et
un contrôleur (14) adapté pour commander le transducteur (16) afin d'effectuer séquentiellement l'écriture (402) de servo-informations à partir d'un cylindre ayant le plus petit numéro dans un cylindre ayant une obliquité nulle, (b) après avoir écrit les servo-informations dans le cylindre ayant une obliquité nulle, déplacer (404) une tête vers un cylindre ayant le plus grand numéro, (c) écrire séquentiellement (405) les servo-informations depuis le cylindre ayant le plus grand numéro vers un cylindre situé avant le cylindre ayant une obliquité nulle, et (d) après (c), inspecter (503) les servo-informations écrites dans un cylindre à une distance prédéterminée du cylindre ayant une obliquité nulle et déterminer si les servo-informations sont correctement écrites.

5. Unité de disque selon la revendication 4 adaptée pour fonctionner conformément aux revendications 2 ou 3 du procédé.
